# EUROPEAN PATENT SPECIFICATION

(11) **EP 3 681 245 B1**
(45) Date of publication and mention of the grant of the patent: **06.03.2024**
(21) Application number: 20153681.0
(22) Date of filing: 23.01.2013
(51) Int. Cl.: H04W 84/20, H04W 4/80

(54) **METHODS AND DEVICES FOR SWITCHING COORDINATOR IN A PERSONAL AREA NETWORK**
VERFAHREN UND GERÄTE ZUM UMSCHALTEN VON KOORDINATOREN IN EINEM PERSÖNLICHEN NETZWERK
PROCÉDÉ ET DISPOSITIFS DE COMMUTATION DE COORDINATEUR DANS UN RÉSEAU PERSONNEL

(30) Priority: 18.01.2013 IN 284CH2012
(43) Date of publication of application: 15.07.2020
(62) Divisional of application: 13741079.1
(73) Proprietor: Samsung Electronics Co., Ltd., Gyeonggi-do 16677 (KR)
(72) Inventor: Patro, Ranjeet Kumar, 560037 Bangalore (IN); Arunan, Thenmozhi, 560037 Bangalore (IN)
(74) Representative: Nederlandsch Octrooibureau

(56) References cited:
- WO-A1-2008/032976
- WO-A2-2008/026874
- US-A1- 2005 033 816
- THAFER H SULAIMAN ET AL: "Improved PNC Selection Criteria and Process for IEEE802.15.3 [Ad Hoc and Sensor Networks]", IEEE COMMUNICATIONS MAGAZINE, IEEE SERVICE CENTER, PISCATAWAY, US, vol. 45, no. 12, 1 December 2007 (2007-12-01), pages 102-109, XP011198455, ISSN: 0163-6804

## Description

### [Technical Field]

The present invention relates to methods and apparatuses for switching coordinator in a Personal Area Network (PAN). More specifically, the present invention relates to methods and apparatuses for switching coordinators based on certain conditions in a Wireless Personal Area Network (WPAN).

### [Background Art]

Wireless Personal Area Networks (WPANs) find application in number of real time situations. For example, WPANs are used in hospitals, transportation and logistics and the like to enable individual devices to interact with each other in a network zone. In such situations, devices are connected to each other within the zone to facilitate certain types of communication, including data, and short message transfer. In order to manage and coordinate communication between the devices, one or more PAN coordinators can be used.

IEEE 802.15.4 comprises networking protocols for WPANs, coordinators, and devices connected. For example, in a hospital environment, there can be one or more wireless sensory devices attached to the body of a patient. The sensory devices shall be configured to monitor multiple parameters. The sensory devices communicate with the PAN coordinators through wireless means, for example, to report collected parameters. During such situations, if the patient is to be shifted or relocated within the hospital premises with the attached sensory devices, suitable steps need to be performed to facilitate such a transition with appropriate power consumption. Conventional methods appear to be power consuming during the transition.

The patent document "WO 2008/026874 A2", disclosed on March 6, 2008, discloses a handover method that a current coordinator transfers a coordinatina function of controlling a network to a different device configuring the network.

The patent document "US 2005/033816 A1", disclosed on February 10, 2005, discloses a terminal device and a method which enable selection of a master station capable of optimizing the communication quality under the occurrence of the external interference

### [Disclosure]

### [Technical Problem]

The present invention provides methods and apparatuses for switching coordinator in a Personal Area Network (PAN).

### [Technical Solution]

The present invention defines a method for coordinator switching in a personal network, performed by a coordinator being one of the at least one coordinator according to independent claim 1, a corresponding coordinator according to independent claim 5, an inter-related method performed by a device in the personal network according to independent claim 9, and a corresponding device according to independent claim 12. Preferred embodiments are defined in the dependent claims.

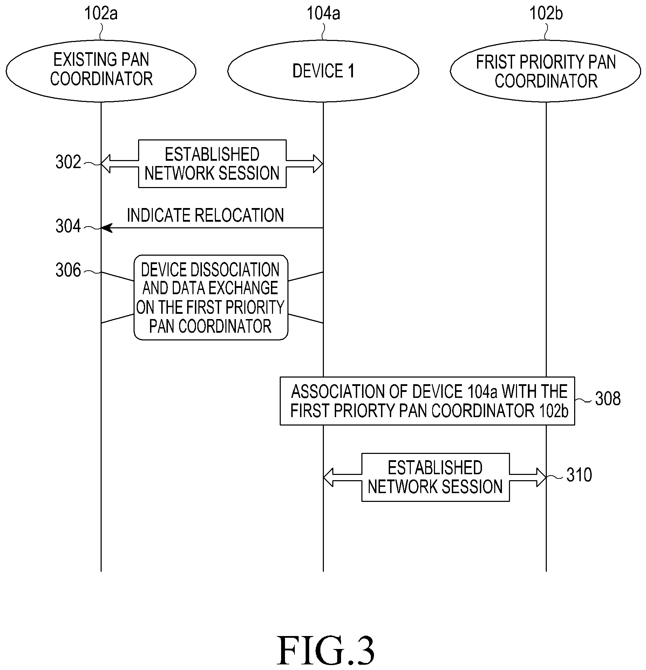

In the following detailed description, embodiments of the present invention are described with reference to figure 3 and the associated passages. Other figures and passages, even when indicated as "embodiment or aspect of the present invention" are presented for illustrative purposes allowing a better understanding of the invention, which might be reflected in the dependent claims.

In an aspect of the present invention, a method of switching Personal Area Network (PAN) coordinators is provided. The method includes the steps of initiating a request for switching the one or more devices present in a network session to a first priority PAN coordinator, the request comprising a count of the one or more devices, transmitting the request comprising a requirement for supporting the one or more devices of that count, the request is transmitted to the first priority PAN coordinator, determining whether the first priority PAN coordinator is capable of supporting the one or more devices, and if yes, switching the network session of the one or more devices with the first priority PAN coordinator to facilitate establishment of the network session with the first priority PAN coordinator. Further, if the first priority PAN coordinator is not capable, the request is transmitted to the next priority PAN coordinator and the above mentioned steps after transmission of request are repeated to establish the network session.

In another aspect of the present invention, an apparatus for switching Personal Area Network (PAN) coordinator in a network with one or more devices is provided. The apparatus includes a processor, a memory connected to the processor, configured with one or more programs to perform a set of predefined instructions with the help of the processor, the memory comprising a coordinator switching module configured for initiating a request for switching the one or more devices present in a network session to a first priority PAN coordinator, the request comprising a count of the one or more devices, transmitting the request comprising a requirement for supporting the one or more devices of that count, the request is transmitted to the first priority PAN coordinator, determining whether the first priority PAN coordinator is capable of supporting the one or more devices, and if yes, switching the network session of the one or more devices with the first priority PAN coordinator to facilitate establishment of the network session with the first priority PAN coordinator. Further, if the first priority PAN coordinator is not capable, the request is transmitted to the next priority PAN coordinator and the above mentioned steps after transmission of request are repeated to establish the network session.

In yet another aspect of the present invention, a system is provided. The system comprising one or more devices, and a Personal Area Network (PAN) coordinator configured to manage communication of the one or more devices, the PAN coordinator comprises a memory and a processor, the memory includes a coordinator switching module configured to perform the steps of initiating a request for switching the one or more devices present in a network session to a first priority PAN coordinator, the request comprising a count of the one or more devices, transmitting the request comprising a requirement for supporting the one or more devices of that count, the request is transmitted to the first priority PAN coordinator, determining whether the first priority PAN coordinator is capable of supporting the one or more devices, and if yes, switching the network session of the one or more devices with the first priority PAN coordinator to facilitate establishment of the network session with the first priority PAN coordinator. Further, if the first priority PAN coordinator is not capable, the request is transmitted to the next priority PAN coordinator and the above mentioned steps after transmission of request are repeated to establish the network session.

### [Description of Drawings]

Figure 1 illustrates a system diagram where one or more devices connected to a Personal Area Network (PAN) coordinator.
Figure 2 is a flow diagram explaining a conventional method of switching PAN coordinators.
Figure 3 is flow diagram for switching PAN coordinators in accordance with an embodiment of the present invention.
Figure 4 is a flow chart illustrating steps involved in switching PAN coordinators in accordance with an embodiment of the present invention.
Figure 5a is a flow diagram providing one or more steps performed in a system to switch PAN coordinators in accordance with an embodiment of the present invention.
Figure 5b is a flow diagram providing one or more steps performed in a system to switch PAN coordinators in accordance with another embodiment of the present invention.
Figure 5c is a flow diagram providing one or more steps performed in a system to switch PAN coordinators in accordance with another embodiment of the present invention.
Figure 6 illustrates an exemplary structure of coordinator switch response frame in accordance with an embodiment of the present invention.
Figure 7 illustrates an exemplary structure of coordinator switch response frame in accordance with an embodiment of the present invention.
Figure 8 is a block diagram of a PAN coordinator in accordance with an embodiment of the present invention.
Figure 9 is a block diagram of one of the one or more devices in accordance with an embodiment of the present invention.

The figures that are provided in the present invention are for illustrative purposes only and in no way to be considered as limitations.

### [Mode for Invention]

In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

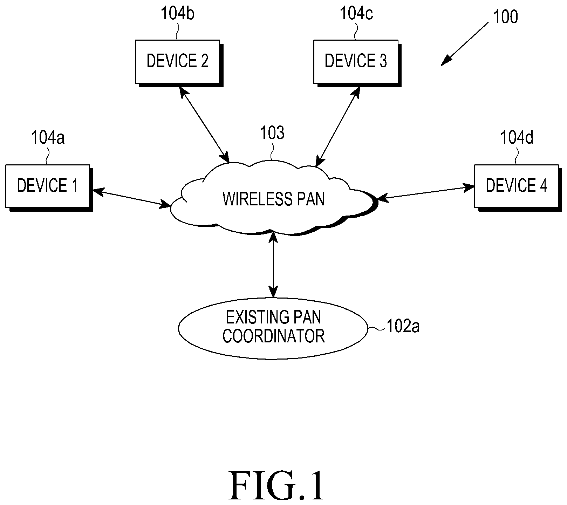

Figure 1 illustrates a system diagram where one or more devices connected to a Personal Area Network (PAN) coordinator.

System 100 includes a first device 104a, a second device 104b, a third device 104c, and a fourth device 104d, and a first PAN coordinator 102a. The devices 104a, 104b, 104c, and 104d are connected to the first PAN coordinator 102a through a Wireless Personal Area Network (WPAN) in accordance with an embodiment of the present invention. The system 100 can be applicable in number of real time situations. For example, the one or more devices 104a, 104b, 104c, and 104d can be sensory devices attached to a body of the patient in a hospital to monitor one or more physical parameters. The PAN coordinator 102a can be managing and coordinating communication of the one or more devices 104a, 104b, 104c, and 104d. Further, in another WPAN, another PAN coordinator may be present to assist in coordinating the communication of the devices 104a, 104b, 104c, and 104d when they are out of range of the first PAN coordinator 102a.

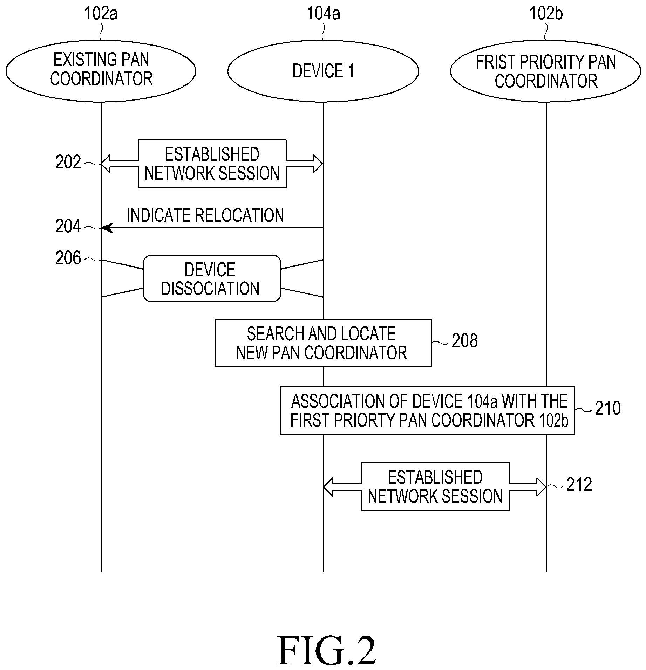

Figure 2 is a flow diagram explaining a conventional method of switching PAN coordinators.

It shall be noted in the flow diagram that flow of steps occurs between the first PAN coordinator 102a, the first device 104a and a first priority PAN coordinator 102b. The first priority PAN coordinator 102b can be a candidate PAN coordinator 102b that can connect with one or more devices within the network and coordinate the communication.

Moreover, the flow diagram depicts an example of the existing or conventional method of switching PAN coordinator in the PAN. The first PAN coordinator 102a and the first device 104a are assumed to be in an established network session. The network session is referred in step 202 of the flow diagram. In step 204, the device 104a indicates the movement to a new location to the first PAN coordinator 104a. In an alternative embodiment, the first PAN coordinator 102a may detect that location of the first device 104a is out of network zone. There can be many reasons for change in location of the first device 104a. For example, if the first device 104a is attached to body of the patient, when the patient moves, the first device 104a moves along. In step 206, the network session between the first PAN coordinator 102a and the first device 104a is turned off due to dissociation. In the present example, the dissociation occurred because of the relocation of the first device 104a.

In step 208, the first device 104a may constantly search and locate new PAN coordinators within the network range. The searching and locating of the new PAN coordinators within a network zone is a power consuming activity for the device 104a. For example, when the device 104a locates the first priority PAN coordinator 102b as the new coordinator, in step 210, the first priority PAN coordinator 102b and the device 104a forms an association. Thereafter, in step 212 a new network session is established between the second PAN coordinator 102b and the first device 104a. Further, there may be other number of steps involved in re-establishing the network session.

Figure 3 is flow diagram for switching PAN coordinators in accordance with an embodiment of the present invention.

The flow diagram in accordance with the present embodiment provides scheme of events occurring the system to perform switching of PAN coordinators. In step 302, a network session is established between the existing PAN coordinatorand the device 104a. In step 304, the device 104a indicates the first PAN coordinator 102a about relocation which may take the first device 104a out of network zone. On receiving the indication from the device 104a, in step 306, the PAN coordinator 102a shares the information of the first priority PAN coordinator 102b for facilitating switching of the PAN coordinator from the first PAN coordinator 102a to the first priority PAN coordinator 102b. In the same step 306, the PAN coordinator 102a and the device 104a dissociate from each other.

In step 308, the device 104a and the first priority PAN coordinator 102b form an association and thereafter, in step 310, a network session is established between the device 104a and the first priority PAN coordinator 102b. During the switching of coordinator, the first coordinator 102a determines whether the first priority PAN coordinator 102b is capable of performing network coordination and communication management of the device 104a and in case, multiple devices are to be connected to the first priority PAN coordinator 102b, then count of the multiple devices is taken into account.

It may be noticed that step 208 present in the flow diagram of figure 2 is not performed by the device 104a in the figure 3. The step of searching and locating the suitable PAN coordinator is performed by the first PAN coordinator 102a. Hence, the power consuming activity is negated in accordance with the present embodiment of the invention.

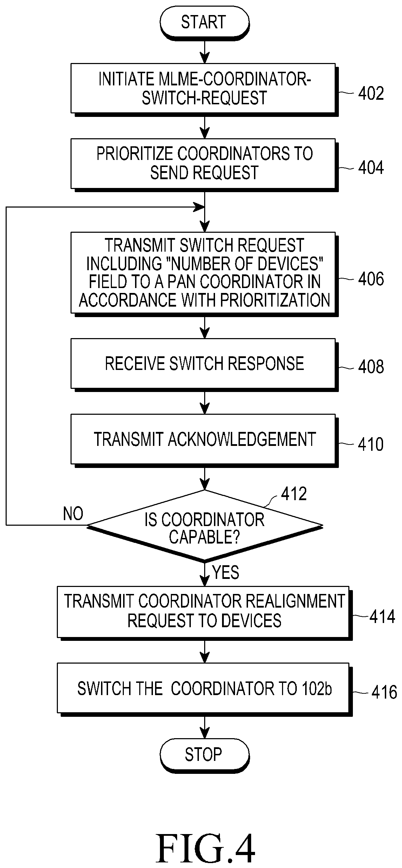

Figure 4 is a flow chart illustrating steps involved in switching PAN coordinators in accordance with an embodiment of the present invention.

In accordance with the present embodiment, a method 400 includes a plurality of steps to perform switching of PAN coordinators. In the step 402, a Mac Layer Management Entity (MLME) coordinator switch request is initiated at the first PAN coordinator 102a. The request is intended for switching one or more devices connected to an existing PAN coordinator to a new PAN coordinator. The initiation may happen between frame transfers between a Media Access Control (MAC) layer of the PAN coordinator 102a (the existing PAN coordinator) and a first network layer. The first network layer may be contributing to any device connected to the PAN coordinator 102a. In step 404, the PAN coordinator 102a may configure a priority table within to determine potential new PAN coordinators to perform the switch over based on certain criteria. For example, the priority table may include list of PAN coordinators that are candidates for switching in the future, their address and information.

In step 406, the first PAN coordinator 102a transmits a switch request including "count of devices" field to the first priority PAN coordinator 102b (the new PAN coordinator). The count of devices may refer to the number of devices that are connected to the first PAN coordinator 102a and are intended to be switched to the first priority PAN coordinator 102b. The count of devices is a requirement for the second PAN coordinator 102b for establishing capability. This step may ensure the first PAN coordinator 102a to prove the capability of replacing the coordination and management activities by the first priority PAN coordinator 102b successfully.

In step 408, the first priority PAN coordinator 102b provides or transmits a response for the request raised in the step 406, the response is received at the first PAN coordinator 102a. For example, in one or more embodiments, since the communication between the PAN coordinators and the devices connected occur in the MAC layer of the network, the data is shared in the form of frames in accordance with the protocols of Wireless PAN. For example, the response frame from the first priority PAN coordinator 102b includes 'switch status' as one of the fields denoting status of switching to the first PAN coordinator 102a. In step 410, an acknowledgement frame is transmitted by the first PAN coordinator 102a to the first priority PAN coordinator 102b. Further, the acknowledgement frame shall be provided by the first PAN coordinator 102a within a threshold time.

On receiving the response from the first priority PAN coordinator 102b, the first PAN coordinator 102a, in step 412, determines whether the first priority PAN coordinator 102b is capable of coordinating and managing the communication of the devices with the count or number of devices, as transmitted in the request. If yes, in step 414, the first PAN coordinator 102a transmits a coordinator realignment request frame to the devices. If no, in step 412, the first PAN coordinator 102a transmits a switch request frame to a second priority PAN coordinator in accordance with the priority table and repeats steps 408, 410 and 412 until it finds the capable PAN coordinator for coordinating and managing the communication of the devices with the count or number of devices transmitted in the request. Thereafter, the first priority PAN coordinator 102b and the device 104b establish a realigned network session. As denoted in step 416, the method concludes with completion of the switching the PAN coordinator.

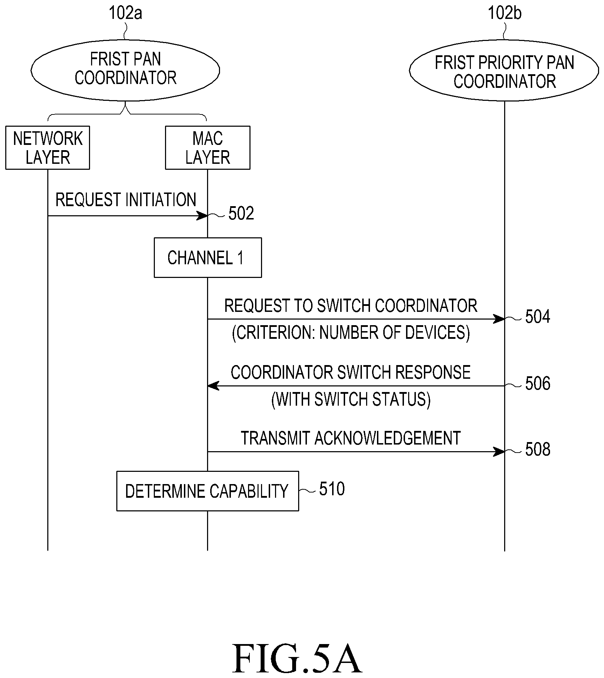

Figure 5a is a flow diagram providing one or more steps performed in a system to switch PAN coordinators in accordance with an embodiment of the present invention. In step 502, a request for switching one or more devices present in a network session with the first PAN coordinator 102a is initiated. The request includes a count of the one or more devices. The request is initiated by transfer of frames between the network layer and the MAC layer of the first PAN coordinator 102a. The first PAN coordinator 102a may prioritize the PAN coordinators that present in the network in vicinity. A priority table is created with list of PAN coordinators that are suitable candidates for the coordinator switching. In step 504, at channel 1, the first PAN coordinator 102 transmits a request to switch the one or more devices connected to it to the first priority PAN coordinator 102b. The request includes a count of number of devices connected to or is in network session with the first PAN coordinator 102a. The first priority PAN coordinator 102b may be present at top of the priority table which includes the list of other suitable PAN coordinators. There may multiple factors involved in prioritizing suitable PAN coordinators. Those factors are known to the person skilled in the art and will not be discussed further.

In step 506, the first priority PAN coordinator 102b provides a response to the request. The response more importantly, includes a switch status. On receiving the response from the first priority PAN coordinator 102b, the first PAN coordinator 102a transmits an acknowledgement frame at 508, the acknowledgement frame may be sent within a threshold time after receiving the response. The first PAN coordinator 102a determines the capability of the first priority PAN coordinator 102b whether it can handle and coordinator communication of the one or more devices, based on the response.

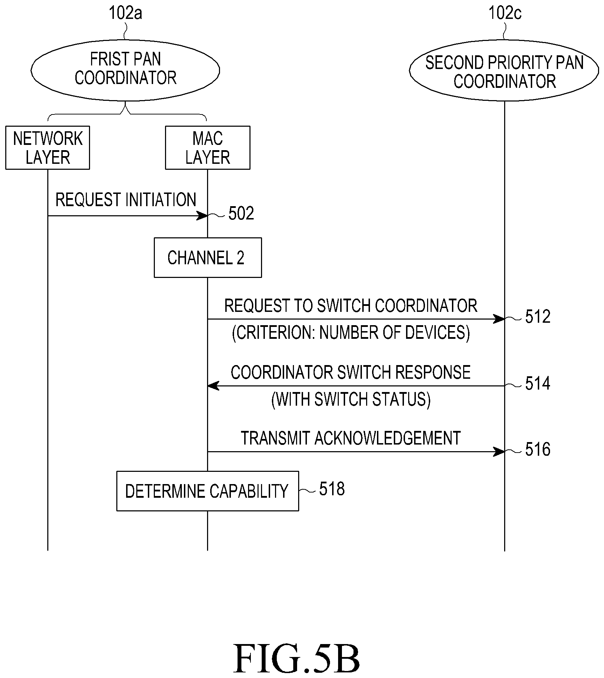

Figure 5b is a flow diagram providing one or more steps performed in a system to switch PAN coordinators in accordance with another embodiment of the present invention.

In the present embodiment, if the first PAN coordinator 102a determines that the first priority PAN coordinator 102b is not capable, in step 512, transmits the request for switching to a second priority PAN coordinator 102c. While transmitting, the first PAN coordinator 102a may select 'Channel 2', another channel for communicating with the second priority PAN coordinator 102c. Steps 512 (request for switching), 514 (reception of coordinator switch response), 516 (transmission of acknowledgement), and 518 (determination of capability of the second priority PAN coordinator 102c) are similar to the steps 504, 506, 508, and 510. Hence, explanation to the mentioned steps is forfeited.

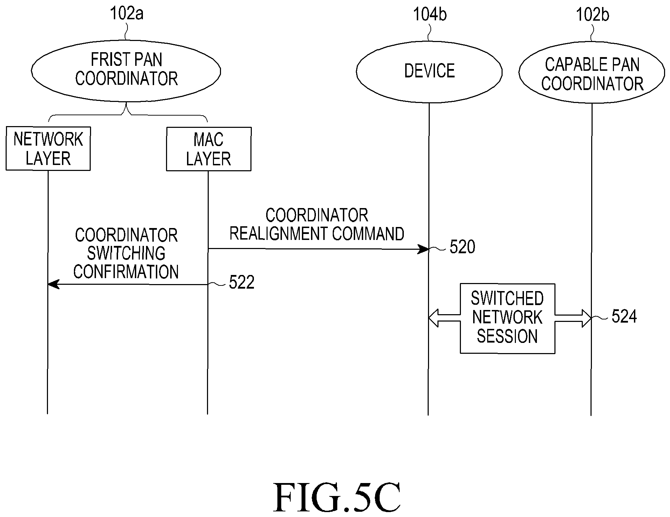

Figure 5c is a flow diagram providing one or more steps performed in a system to switch PAN coordinators in accordance with another embodiment of the present invention.

In accordance with the present embodiment, the first PAN coordinator 102a has determined that the first priority PAN coordinator 102b is capable for handling and coordinating communication of the one or more devices connected to the first PAN coordinator 102a.

In step 520, a coordinator realignment command frame is transmitted by the first PAN coordinator 102a to the device 104b. Thereafter, the MAC layer of the first PAN coordinator 102a transmits a confirmation of switching of coordinator to the network layer. In step 524, the device 104b and a capable PAN coordinator establish a switched network session with each other. For example, if the first priority PAN coordinator 102b is determined capable of coordinating and managing communication of the number or count of devices connected to the first PAN coordinator 102a, then the capable PAN coordinator in accordance with the present embodiment shall be the first priority PAN coordinator 102b. For another example, if the first priority PAN coordinator 102b is determined to be incapable of supporting the number or count of devices connected to the first PAN coordinator 102a, then the capable PAN coordinator in accordance with the present embodiment shall be the second priority PAN coordinator 102c.

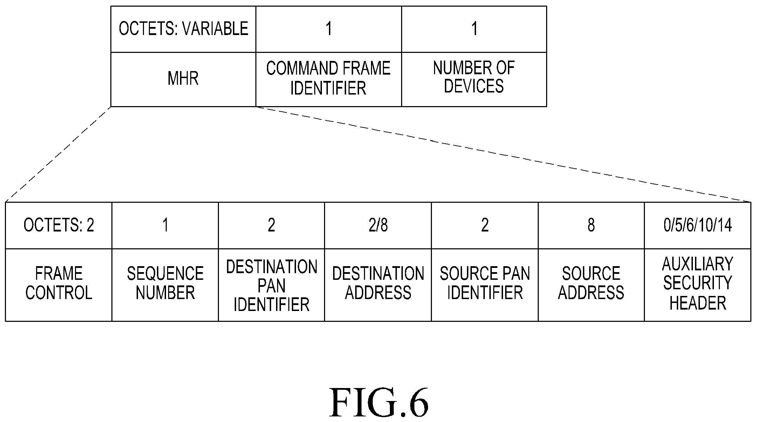

Figure 6 illustrates an exemplary structure of a coordinator-switch-request frame in accordance with an embodiment of the present invention.

The coordinator-switch-request frame includes primarily a Message Header (MHR), a command frame identifier, and 'number of devices'. MHR field of Coordinator Switch Request frame is included in a broadcast transmission from a PAN Coordinator in the Personal Area Network.

In an embodiment, a 'Destination Addressing Mode' field shall be included in the request to indicate short addressing, and 'Source Addressing Mode' shall be included in the request to indicate extended addressing, when coordinator switch request is broadcasted in a selected channel. Further, during the transmission of request, A 'Destination PAN Identifier' field be included which shall contain the PAN identifier that is broadcasted and a 'Destination Address Field' be included which shall contain the broadcast short address.

In an embodiment, a 'Source PAN Identifier' shall contain the value of MAC identifier of the PAN coordinator that imitates the request. In the same embodiment, 'Source Address' contains the value of 'macExtendedAddress' of the PAN coordinator that intends to switch.

In one of the embodiments, the coordinator switch request command can be unicasted to a new PAN coordinator. In such effectuation, the request includes the destination addressing field which is set to include an extended addressing. Further, the destination PAN identifier field includes 'macPANID' of the new PAN coordinator and the destination address field includes the 'macExtendedAddress' of the new PAN coordinator. Further, in an expansive embodiment, the 'source PAN identifier field' includes the value of 'macPANID' of the existing PAN coordinator and the 'source address field' contains the value of 'macExtendedAddress' of the new PAN coordinator that intends to switch.

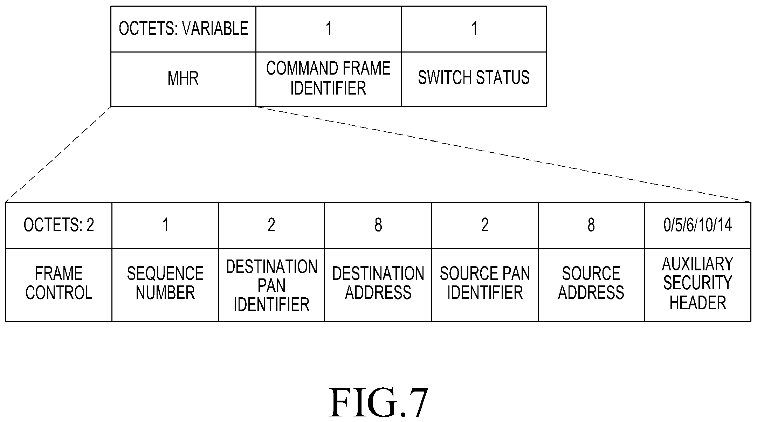

Figure 7 illustrates an exemplary structure of a coordinator switch response frame in accordance with an embodiment of the present invention.

In accordance with the present embodiment, the coordinator switch response frame transmitted by a new PAN coordinator intending to switch includes MHR, a command frame identifier, and a 'switch status'. For example, the command frame identifier value of a command frame identifier may be 0xA0. In an embodiment, the 'switch status' may refer to when the new PAN coordinator responds to the unicast coordinator switch request from the existing PAN coordinator with the field of status set to yes, it indicates that it has confirmed its status as the new PAN coordinator. Further, description of fields of MHR is explained in the description of figure 6.

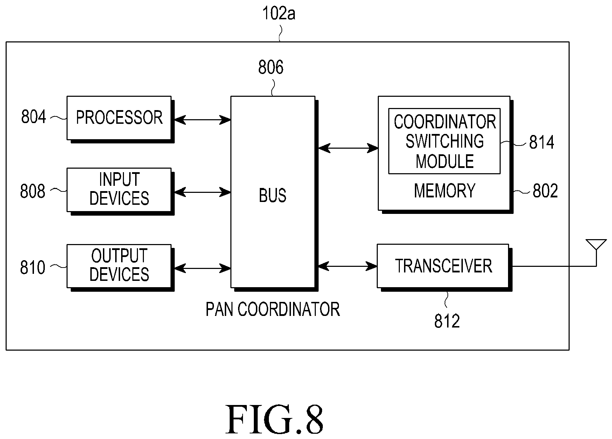

Figure 8 is a block diagram of the first PAN coordinator 102a in accordance with an embodiment of the present invention. The first PAN coordinator 102a includes a memory 802, a processor 804, a bus 806, input devices 808, output devices 810, and a transceiver 812.

The memory 802 includes a coordinator switching module 814 configured to perform switching of PAN coordinators in the network. In an embodiment, the coordinator switching module 814 includes one or programs and resides in the memory 802. The one or more programs are executed with the help of processor 804. The coordinator switching module 814 is configured for initiating a request for switching the one or more devices present in a network session to a first priority PAN coordinator, the request comprising a count of the one or more devices, transmitting the request comprising a requirement for supporting the one or more devices of that count, the request is transmitted to the first priority PAN coordinator, determining whether the first priority PAN coordinator is capable of supporting the one or more devices, and if yes, switching the network session of the one or more devices with the first priority PAN coordinator to facilitate establishment of the network session with the first priority PAN coordinator. Further, the coordinator switching module is configured to perform one or more steps as illustrated in figures 4, 5a, 5b, and 5c at the end of the first PAN coordinator 102a.

Furthermore, the memory 800 may be volatile memory and non-volatile memory. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling memory cards, Memory SticksTM, and the like.

The processor 804, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 804 may also include embedded controllers, such as generic or programmable logic devices or arrays, application specific integrated circuits, single-chip computers, smart cards, and the like. The transceiver 812 is for signal reception and transmission with the network. It is provided as an example that the transceiver 812 is present as a single unit. However, the transceiver 812 may be present as a separated unit with receiver and transmitter.

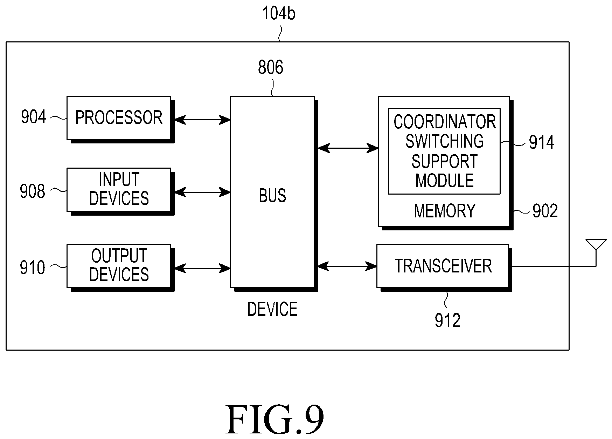

Figure 9 is a block diagram of one of the one or more devices in accordance with an embodiment of the present invention.

The second device 104b includes a memory 902, a processor 904, a bus 906, input devices 908, output devices 910, and a transceiver 912. The memory 902 includes a coordinator switching support module 914. The coordinator switching support module 914 may be configured with one or more programs to support switching of PAN coordinators in the network. In an embodiment, the coordinator switching support module 914 is capable of performing one or more steps occurring at the end of the second device 104b in the figures 4, 5a, 5b, and 5c. Other components of the second device 104b are known to the persons skilled in the art and will not be explained further. Embodiments of the present subject matter may be implemented in conjunction with modules, including functions, procedures, data structures, and application programs, for performing tasks, or defining abstract data types or low-level hardware contexts. Machine-readable instructions stored on any of the above-mentioned storage media may be executable by a processor.

The present embodiments have been described with reference to specific example embodiments. Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

## Claims

1. A method for switching coordinator in a personal area network including at least one coordinator and at least one device, the method comprising:
establishing (302), by a coordinator, being one of the at least one coordinator, a network session between said coordinator and the at least one device;
receiving (304), by the coordinator, an indication of relocation from the at least one device that takes said device out of a network zone,
transmitting (306, 520), by the coordinator, through the established network session (302), information of a new coordinator determined based on a relocation indication by the at least one device (304), to the at least one device and
releasing (306), by the coordinator, an association between the coordinator and the at least one device.

2. The method as recited in claim 1, wherein the transmitting the information of the new coordinator comprises:
transmitting (504), a switch request to the new coordinator ;
determining (510) whether the new coordinator is capable of supporting the at least one device; and
transmitting (520), when the new coordinator is capable of supporting the at least one device, the information of the new coordinator to the at least one device,
wherein the new coordinator is a first priority coordinator determined based on a priority table for the at least one coordinator.

3. The method as recited in claim 2, wherein the determining whether the new coordinator is capable of supporting the at least one device comprises:
transmitting (512), when the new coordinator is not capable of supporting the at least one device, the switch request to a next priority coordinator determined based on the priority table, wherein the switch request includes a requirement for supporting the at least one device.

4. The method as recited in claim 2, further comprising:
transmitting (508) by the coordinator an acknowledgement to the new coordinator on receiving a response from the new coordinator,
wherein the response is received within a threshold time.

5. A coordinator for switching coordinator in a personal area network including at least one coordinator and at least one device, the coordinator, being one of the at least one coordinator, comprising
a transceiver (812) is configured to establish a network session between said coordinator and the at least one device, receive an indication of relocation from the at least one device that takes said device out of a network zone,
transmit, through the established network session, information of a new coordinator determined based on a relocation indication by the at least one device to the at least one device and
a processor (804) is configured to release an association between the coordinator and the at least one device.

6. The coordinator of claim 5, wherein the transceiver is configured to transmit a switch request to the new coordinator, and
wherein the processor is configured to determine whether the new coordinator is capable of supporting the at least one device, and
wherein the transceiver is further configured to transmit, when the new coordinator is capable of supporting the at least one device, the information of the new coordinator to the at least one device,
wherein the new coordinator is a first priority coordinator determined based on a priority table for the at least one coordinator.

7. The coordinator of claim 6, wherein the transceiver is configured to:
transmit an acknowledgement to the new coordinator on receiving the response from the new coordinator, wherein the response is received within a threshold time.

8. The coordinator of claim 6, wherein in determining whether the new coordinator is capable of supporting the at least one device, the transceiver is configured to:
transmit, when the new coordinator is not capable of supporting the at least one device, the switch request to a next priority coordinator determined based on the priority table, wherein the switch request includes a requirement for supporting the at least one device.

9. A method for coordinator switching in a personal area network including at least one coordinator and at least one device, the method comprising:
establishing (302), by a device, being one of the at least one device, a network session between said device and a coordinator being one of said at least one coordinator;
transmitting (304), by the device, an indication of relocation that takes said device out of a network zone from the coordinator, receiving (306, 520), by the device, through the established network session (302), information of a new coordinator determined based on a relocation indication by the device (304) from the coordinator;
releasing (306), by the device, an association between the coordinator and the device;
forming (308) an association by the device and the new coordinator; and
establishing (310) a new network session between the device and the new coordinator.

10. The method as recited in claim 9, wherein when the new coordinator is capable of supporting the device, the information of the new coordinator is received from the at least one coordinator.

11. A device (104a, 104b) for coordinator switching in a personal area network including at least one coordinator and the at least one device, the device, being one of the at least one device, comprising:
a transceiver (912) configured to establish (302) a network session between the device and a coordinator, being one of the at least one coordinator, transmit an indication of relocation that takes the device out of a network zone, receive, through the established network session, information of a new coordinator (102b) determined based on a relocation indication by the device from the coordinator (102a); and
a controller (904) configured to release the association between the coordinator (102a) and the device, form an association with the new coordinator (102b) and establish a network session with the new coordinator (102b).

12. The device as recited in claim 11, wherein when the new coordinator is capable of supporting the device, the transceiver is further configured to receive the information of the new coordinator from the at least one coordinator.

## Patentansprüche

1. Verfahren zum Umschalten eines Koordinators in einem persönlichen Netzwerk, das mindestens einen Koordinator und mindestens eine Vorrichtung enthält, wobei das Verfahren Folgendes umfasst:
Einrichten (302) einer Netzwerksitzung zwischen dem Koordinator und der mindestens einen Vorrichtung durch einen Koordinator, der einer des mindestens einen Koordinators ist;
Empfangen (304) einer Verlagerungsanzeige, die die Vorrichtung aus einer Netzwerkzone entfernt, durch den Koordinator von der mindestens einen Vorrichtung,
Übertragen (306, 520) von Informationen eines neuen Koordinators, der basierend auf einer Verlagerungsanzeige durch die mindestens eine Vorrichtung (304) bestimmt wird, durch den Koordinator über die eingerichtete Netzwerksitzung (302) an die mindestens eine Vorrichtung und
Freigeben (306) einer Verbindung zwischen dem Koordinator und der mindestens einen Vorrichtung durch den Koordinator.

2. Verfahren nach Anspruch 1, wobei das Übertragen der Informationen des neuen Koordinators Folgendes umfasst:
Übertragen (504) einer Umschaltanforderung an den neuen Koordinator;
Bestimmen (510), ob der neue Koordinator in der Lage ist, die mindestens eine Vorrichtung zu unterstützen; und
Übertragen (520) der Informationen des neuen Koordinators an die mindestens eine Vorrichtung, wenn der neue Koordinator in der Lage ist, die mindestens eine Vorrichtung zu unterstützen,
wobei der neue Koordinator ein Koordinator erster Priorität ist, der basierend auf einer Prioritätstabelle für den mindestens einen Koordinator bestimmt wird.

3. Verfahren nach Anspruch 2, wobei das Bestimmen, ob der neue Koordinator in der Lage ist, die mindestens eine Vorrichtung zu unterstützen, Folgendes umfasst:
Übertragen (512) der Umschaltanforderung an einen nächsten Prioritätskoordinator, der basierend auf der Prioritätstabelle bestimmt wird, wenn der neue Koordinator nicht in der Lage ist, die mindestens eine Vorrichtung zu unterstützen, wobei die Umschaltanforderung eine Anforderung zum Unterstützen der mindestens einen Vorrichtung enthält.

4. Verfahren nach Anspruch 2, das ferner Folgendes umfasst:
Übertragen (508) einer Bestätigung durch den Koordinator an den neuen Koordinator beim Empfangen einer Antwort von dem neuen Koordinator,
wobei die Antwort innerhalb einer Schwellenzeit empfangen wird.

5. Koordinator zum Umschalten eines Koordinators in einem persönlichen Netzwerk, das mindestens einen Koordinator und mindestens eine Vorrichtung enthält, wobei der Koordinator einer des mindestens einen Koordinators ist, der Folgendes umfasst:
einen Transceiver (812), der konfiguriert ist, um eine Netzwerksitzung zwischen dem Koordinator und der mindestens einen Vorrichtung einzurichten, eine Verlagerungsanzeige, die die Vorrichtung aus einer Netzwerkzone entfernt, von der mindestens einen Vorrichtung zu empfangen und Informationen eines neuen Koordinators, der basierend auf einer Verlagerungsanzeige durch die mindestens eine Vorrichtung bestimmt wird, über die eingerichtete Netzwerksitzung an die mindestens eine Vorrichtung zu übertragen und
einen Prozessor (804), der konfiguriert ist, um eine Verbindung zwischen dem Koordinator und der mindestens einen Vorrichtung freizugeben.

6. Koordinator nach Anspruch 5, wobei der Transceiver konfiguriert ist, um eine Umschaltanforderung an den neuen Koordinator zu übertragen, und
wobei der Prozessor konfiguriert ist, um zu bestimmen, ob der neue Koordinator in der Lage ist, die mindestens eine Vorrichtung zu unterstützen, und
wobei der Transceiver ferner konfiguriert ist, um die Informationen des neuen Koordinators an die mindestens eine Vorrichtung zu übertragen, wenn der neue Koordinator in der Lage ist, die mindestens eine Vorrichtung zu unterstützen,
wobei der neue Koordinator ein Koordinator erster Priorität ist, der basierend auf einer Prioritätstabelle für den mindestens einen Koordinator bestimmt wird.

7. Koordinator nach Anspruch 6, wobei der Transceiver konfiguriert ist zum:
Übertragen einer Bestätigung an den neuen Koordinator beim Empfangen der Antwort von dem neuen Koordinator, wobei die Antwort innerhalb einer Schwellenzeit empfangen wird.

8. Koordinator nach Anspruch 6, wobei bei dem Bestimmen, ob der neue Koordinator in der Lage ist, die mindestens eine Vorrichtung zu unterstützen, der Transceiver konfiguriert ist zum:
Übertragen der Umschaltanforderung an einen nächsten Prioritätskoordinator, der basierend auf der Prioritätstabelle bestimmt wird, wenn der neue Koordinator nicht in der Lage ist, die mindestens eine Vorrichtung zu unterstützen, wobei die Umschaltanforderung eine Anforderung zum Unterstützen der mindestens einen Vorrichtung enthält.

9. Verfahren zum Umschalten eines Koordinators in einem persönlichen Netzwerk, das mindestens einen Koordinator und mindestens eine Vorrichtung enthält, wobei das Verfahren Folgendes umfasst:
Einrichten (302) einer Netzwerksitzung zwischen der Vorrichtung und einem Koordinator, der einer des mindestens einen Koordinators ist, durch eine Vorrichtung, die eine der mindestens einen Vorrichtung ist;
Übertragen (304) einer Verlagerungsanzeige, die die Vorrichtung aus einer Netzwerkzone entfernt, durch die Vorrichtung von dem Koordinator;
Empfangen (306, 520) von Informationen eines neuen Koordinators, der basierend auf einer Verlagerungsanzeige durch die Vorrichtung (304) bestimmt wird, durch die Vorrichtung über die eingerichtete Netzwerksitzung (302) von dem Koordinator;
Freigeben (306) einer Verbindung zwischen dem Koordinator und der Vorrichtung durch die Vorrichtung;
Bilden (308) einer Verbindung durch die Vorrichtung und den neuen Koordinator; und
Einrichten (310) einer neuen Netzwerksitzung zwischen der Vorrichtung und dem neuen Koordinator.

10. Verfahren nach Anspruch 9, wobei die Informationen des neuen Koordinators von dem mindestens einen Koordinator empfangen werden, wenn der neue Koordinator in der Lage ist, die Vorrichtung zu unterstützen.

11. Vorrichtung (104a, 104b) zum Umschalten eines Koordinators in einem persönlichen Netzwerk, die mindestens einen Koordinator und die mindestens eine Vorrichtung enthält, wobei die Vorrichtung eine der mindestens einen Vorrichtung ist, die Folgendes umfasst:
einen Transceiver (912), der konfiguriert ist, um eine Netzwerksitzung zwischen der Vorrichtung und einem Koordinator einzurichten (302), der einer des mindestens einen Koordinators ist, eine Verlagerungsanzeige zu übertragen, die die Vorrichtung aus einer Netzwerkzone entfernt, und Informationen eines neuen Koordinators (102b), der basierend auf einer Verlagerungsanzeige durch die Vorrichtung bestimmt wird, über die aufgebaute Netzwerksitzung von dem Koordinator (102a) zu empfangen; und
eine Steuerung (904), die konfiguriert ist, um die Verbindung zwischen dem Koordinator (102a) und der Vorrichtung freizugeben, eine Verbindung mit dem neuen Koordinator (102b) zu bilden und eine Netzwerksitzung mit dem neuen Koordinator (102b) einzurichten.

12. Vorrichtung nach Anspruch 11, wobei, wenn der neue Koordinator in der Lage ist,
die Vorrichtung zu unterstützen, der Transceiver ferner konfiguriert ist, um die Informationen des neuen Koordinators von dem mindestens einen Koordinator zu empfangen.

## Revendications

1. Procédé de commutation de coordinateur dans un réseau personnel incluant au moins un coordinateur et au moins un dispositif, le procédé comprenant :
établir (302), par un coordinateur, étant l'un parmi l'au moins un coordinateur, une session de réseau entre ledit coordinateur et l'au moins un dispositif ;
recevoir (304), par le coordinateur, une indication de relocalisation de l'au moins un dispositif qui sort ledit dispositif d'une zone de réseau,
transmettre (306, 520), par le coordinateur, à travers la session de réseau établie (302), des informations d'un nouveau coordinateur déterminé sur la base d'une indication de relocalisation par l'au moins un dispositif (304), à l'au moins un dispositif et
libérer (306), par le coordinateur, une association entre le coordinateur et l'au moins un dispositif.

2. Procédé selon la revendication 1, où la transmission des informations du nouveau coordinateur comprend :
transmettre (504), une demande de commutation au nouveau coordinateur ;
déterminer (510) si le nouveau coordinateur est capable de prendre en charge l'au moins un dispositif ; et
transmettre (520), lorsque le nouveau coordinateur est capable de prendre en charge l'au moins un dispositif, les informations du nouveau coordinateur à l'au moins un dispositif,
où le nouveau coordinateur est un coordinateur de première priorité déterminé sur la base d'un tableau de priorités pour l'au moins un coordinateur.

3. Procédé selon la revendication 2, où déterminer si le nouveau coordinateur est capable de prendre en charge l'au moins un dispositif comprend :
transmettre (512), lorsque le nouveau coordinateur n'est pas capable de prendre en charge l'au moins un dispositif, la demande de commutation vers un coordinateur de priorité suivante déterminé sur la base du tableau de priorités, où la demande de commutation inclut une exigence pour prendre en charge l'au moins un dispositif.

4. Procédé selon la revendication 2, comprenant en outre :
transmettre (508) par le coordinateur un accusé de réception au nouveau coordinateur dès réception d'une réponse du nouveau coordinateur,
où la réponse est reçue dans un temps seuil.

5. Coordinateur de commutation de coordinateur dans un réseau personnel incluant au moins un coordinateur et au moins un dispositif, le coordinateur, étant l'un parmi l'au moins un coordinateur, comprenant :
un émetteur-récepteur (812) est configuré pour établir une session de réseau entre ledit coordinateur et l'au moins un dispositif, recevoir une indication de relocalisation de l'au moins un dispositif qui sort ledit dispositif d'une zone de réseau,
transmettre, à travers la session de réseau établie, des informations d'un nouveau coordinateur déterminé sur la base d'une indication de relocalisation par l'au moins un dispositif à l'au moins un dispositif et
un processeur (804) est configuré pour libérer une association entre le coordinateur et l'au moins un dispositif.

6. Coordinateur selon la revendication 5, où l'émetteur-récepteur est configuré pour transmettre une demande de commutation au nouveau coordinateur, et
où le processeur est configuré pour déterminer si le nouveau coordinateur est capable de prendre en charge l'au moins un dispositif, et
où l'émetteur-récepteur est en outre configuré pour transmettre, lorsque le nouveau coordinateur est capable de prendre en charge l'au moins un dispositif, les informations du nouveau coordinateur à l'au moins un dispositif,
où le nouveau coordinateur est un coordinateur de première priorité déterminé sur la base d'un tableau de priorités pour l'au moins un coordinateur.

7. Coordinateur selon la revendication 6, où l'émetteur-récepteur est configuré pour :
transmettre un accusé de réception au nouveau coordinateur lors de la réception de la réponse du nouveau coordinateur, où la réponse est reçue dans un temps seuil.

8. Coordinateur selon la revendication 6, où pour déterminer si le nouveau coordinateur est capable de prendre en charge l'au moins un dispositif, l'émetteur-récepteur est configuré pour :
transmettre, lorsque le nouveau coordinateur n'est pas capable de prendre en charge l'au moins un dispositif, la demande de commutation à un coordinateur de priorité suivante déterminé sur la base du tableau de priorités, où la demande de commutation inclut une exigence pour prendre en charge l'au moins un dispositif.

9. Procédé de commutation de coordinateur dans un réseau personnel incluant au moins un coordinateur et au moins un dispositif, le procédé comprenant :
établir (302), par un dispositif, étant l'un parmi l'au moins un dispositif, une session de réseau entre ledit dispositif et un coordinateur étant l'un dudit au moins un coordinateur ;
transmettre (304), par le dispositif, une indication de relocalisation qui sort ledit dispositif d'une zone de réseau du coordinateur ;
recevoir (306, 520), par le dispositif, à travers la session de réseau établie (302), des informations d'un nouveau coordinateur déterminé sur la base d'une indication de relocalisation par le dispositif (304) du coordinateur ;
libérer (306), par le dispositif, une association entre le coordinateur et le dispositif
former (308) une association par le dispositif et le nouveau coordinateur ; et
établir (310) une nouvelle session de réseau entre le dispositif et le nouveau coordinateur.

10. Procédé selon la revendication 9, où lorsque le nouveau coordinateur est capable de prendre en charge le dispositif, les informations du nouveau coordinateur sont reçues de l'au moins un coordinateur.

11. Dispositif (104a, 104b) de commutation de coordinateur dans un réseau personnel incluant au moins un coordinateur et l'au moins un dispositif, le dispositif étant l'un parmi l'au moins un dispositif, comprenant :
un émetteur-récepteur (912) configuré pour établir (302) une session de réseau entre le dispositif et un coordinateur, étant l'un parmi l'au moins un coordinateur,
transmettre une indication de relocalisation qui sort l'appareil d'une zone de réseau,
recevoir, à travers la session de réseau établie, des informations d'un nouveau coordinateur (102b) déterminées sur la base d'une indication de relocalisation par le dispositif du coordinateur (102a) ; et
un contrôleur (904) configuré pour libérer l'association entre le coordinateur (102a) et le dispositif,
former une association avec le nouveau coordinateur (102b) et établir une session de réseau avec le nouveau coordinateur (102b).

12. Dispositif selon la revendication 11, où lorsque le nouveau coordinateur est capable de prendre en charge le dispositif, l'émetteur-récepteur est en outre configuré pour recevoir les informations du nouveau coordinateur de l'au moins un coordinateur.
